(19) Europäisches Patentamt
European Patent Office
Office européen des brevets

(11) Publication number: **0 196 355 A2**

# (12) EUROPEAN PATENT APPLICATION

(21) Application number: 85108236.2

(22) Date of filing: 03.07.85

(51) Int. Cl.[4]: G 06 F 3/00

(30) Priority: 01.04.85 CN 85100919

(43) Date of publication of application: 08.10.86 Bulletin 86/41

(84) Designated Contracting States: CH DE FR GB IT LI NL SE

(71) Applicant: Xing, Tuan Guo
No. 13, West Changan Street
Beijing(CN)

(72) Inventor: Xing, Tuan Guo
No. 13, West Changan Street
Beijing(CN)

(74) Representative: Popp, Eugen, Dr. et al,
MEISSNER, BOLTE & PARTNER Postfach 86 06 24
D-8000 München 86(DE)

## (54) A non-coding method of Han-character processing and keyboard therefor.

(57) The present invention relates to a new method of inputting Chinese or Han characters (and the like) into computer and a kind of Han characters keyboard designed for the method characterized by utilizing the structural features of the Han characters, in comformity with the conventions of recognizing the characters and the rules for picking the radicals and taking the non-coding input approach. As long as the categorical figures and radicals of Han characters are correctly recognized and used, Han characters may be input by operations of selective keys in accordance with the group of characters shown on the display. The present invention with only a few rules to remember, is easy to understand and learn, simple in operation, and therefore appropriate for use by the common people. The present invention may be used on a Chinese typewriter, on the input terminals of an electronic telewriter, or as the terminal equipment of computerized typesetting system for Chinese characters, and other devices using a Han character input device.

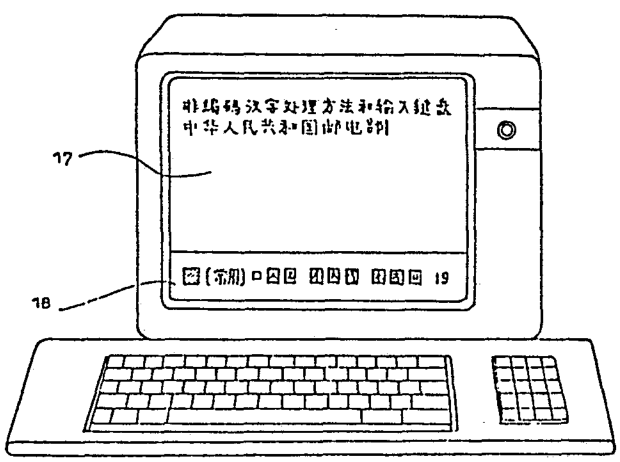


FIG. 8

EP 0 196 355 A2

# A NON-CODING METHOD OF HAN-CHARACTER PROCESSING AND KEYBOARD THEREFOR

## TECHNICAL FIELD

The present invention relates to a new method of inputting Chinese or Han character (and the like) into computer and a kind of Han character keyboard designed for the method.

The keyboard for entering Chinese characters may be used on a Chinese typewriter; on the input terminals of an electronic telewriter; or as the terminal equipment of computerized typesetting system for Chinese characters, and other devices using a Han character input device .

## BACKGROUND ART.

Early keyboards for inputting Chinese characters were a "full keyboard" of whole characters with all the required characters arranged on it. Each word is provided with a key, the words being arranged on the keyboard in a convenient order. One operation of a key results in one entry of a word. The great number of characters arranged on the keyboard results in a large and cumbersome keyboard which makes the typist fatigue due to the large scope of arm movement. In recent years, with the continual development of Chinese Character processing technique, various Han character inputting devices and methods have come into being. Examples are Coding by strokes of the written character as disclosed in granted British patent No. 2100899B, Coding by word shape (geometry), coding by pinyin or phonemes & coding by word shape and phonemes.

All these methods require that the operator commit to memory a lot of encoding rules or that the operator know the "received pronunciation" of Chinese (RPC or dialect of Peking, the Putonghua) and its spelling rules, which is very difficult for those who do not know Chinese and /or who cannot pronounce in accordance with RPC.

The presnt invention offers a kind of simple and rapid input method for Han characters, and a keyboard for inputting Han characters designed to suit the characteristics of the present method.

The present invention takes as basis for designing the operating procedure the non-coding input approach.

That is, utilizing the structural features of the Han characters, in conformity with the conventions of recognizing the characters and the rules for picking the radicals, through the combination of several modes/approaches, the present invention offers the design of a keyboard for inputting Han character without using Alien coding elements.

BRIEF DESCRIPTION OF THE INVENTION

The Han character input approach of the present invention is to be implemented on a standard keyboard of the English typewriter on which some Han characters and the "leading parts" or radicals of Han characters arranged in a definite order, and may be rearranged at the user's request.

The concrete scheme of implementation is described in detail in what follows.

BRIEF DESCRIPTION OF THE DRAWINGS

The present invention is described with reference to the following drawings which form a part of the specification and wherein:

Fig. 1 is a table showing the classification of Han characters into 9 geometrical categories (according to topological continuity and arrangement of disconnected parts) and the corresponding geometrical signs for their identification.

Fig. 2 is a table showing examples of characters in each category of Han character classification and the radicals of those characters.

Fig. 3 is a table showing an example in which the same radical may belong to several categories and an example in which one radical corresponds to only one category.

Fig. 4 shows the flowchart of the order of key-striking of the non-coding approach to the entry of Han characters.

Fig. 5 shows a preferred key arrangement on the keyboard of some of the Han characters and the radicals of the Han characters.

Fig. 6 shows the scheme of key arrangement on an actually implemented input keyboard.

Fig. 7 shows examples of the Han characters, radicals, and signs on the key buttons.

Fig. 8 shows a sketch of CRT display of Han characters wherein 17 is the area for editing, and 18 is the region for selecting Chinese characters or words.

DETAILED DESCRIPTION OF THE INVENTION

The present invention first of all researched into the intrinsic structural features of a great number of Han characters and the rules underlying the formation of Han characters, then determined the 9 categories characterizing the structural types of the Han characters on the basis of those features and rules and worked out the corresponding geometrical signs for the said 9 categories (Fig. 1). These categorical figures can cover the different topological features (of continuity of parts) of all the Han characters, including the unsimplified characters and the variant forms of character. In each categorical sign the shaded area shows the structural feature of that category and position of the radical to be selected. For example,

1. Simplex characters 同, 冈, 周 are represented by the categorical figure 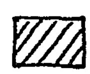, the radical of these characters is 冂, the outer frame.
2. characters with radicals at the bottom 孟, 盂, 盛 etc. are represented by the categorical figure 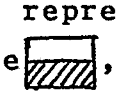, and their radical is 皿.
3. Characters with radical covering both the top and the left of the character 疗, 疰, 疾, etc. are represented by the categorical figure 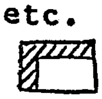

, and their radical is 疒 .

The shaded area in the categorical figure of a character corresponds to the radical to be chosen for that word. In the present input scheme, 231 typical radicals have been selected to correspond to the 9 categorical figures. Some examples of characters in each category are shown in Fig. 2 in correspondence with their categorical figures and radicals.

The 231 typical radicals selected as described above are distributed to the 45 keys of a standard keyboard used for the implementation of the present scheme, see Fig. 5 & 6. On each key are allotted on the average 5 or 6 radicals.

Actually, the same radical may appear in several catagorical figures, while others appear only in one. (see Fig. 3). Examples of characters which belong to several categories but which have the same radical are,

木,术;本 in the category 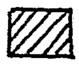 (simplex), with the radical 木

机,板,楝 in the category 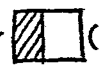 (left half), also with the radical 木

杏, 李, 查 in the category 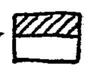 (upper half), again with the radical 木

Thus, in the present method, the situation that the same radical may appear in different categories has been taken into consideration and a set of more than 12,000 characters is divided into 347 category-radical groups, so that each Han character is classified into one such group. In rare cases, one character may be equally justified to go into more than one group, eg, 男

may be put into group top 田 tian 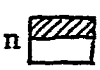, or bottom 力 li 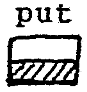 . In this case we would regard both groups as legitimate, i.e. the character 男 may be input either by operating the keys top and tian, or by operating the keys bottom and li.

In one category-radical group, the number of characters ranges from less than ten to more than a hundred. The characters belonging to each of the 347 category-radical groups are subdivided into 4 grades according to their frequency in actural use, namely, the 'frequent,' the 'next frequent', the 'infrequent' and the 'rare'. In each grade the characters are in turn subdivided into different lines, each line having at most 9 characters. For example, in the group (LEFT-MOON) the characters are arranged according to their frequency of usage as follows:

腕腭腋 脚腿腱 鵬腑腓
胳脁膠 臊膦膨 脇……

In the present input scheme, 45 characters of high usage frequency are chosen and defined as 'high frequency characters, and are arranged on the 45 keys for the radicals mentioned above. These high frequency characters, such as 的, 到, 為 etc. are arranged on the keyboard as shown in Fig. 7.

In our design there is the function of inputting by multicharacter/syllable words or phrases. Chinese words are divided into two major classes, viz, 1) multicharacter words for common general use, like but 但是 , expert 专家, economics 经济学 , Integrated circuit 集成电路 etc. A total of more than ten thousand such words can be installed in the system. 2) specialized phrases to be used exclusively by the user, eg., Ministry of Posts & Telecommunications, Chinese Information Processing Society, Color TV Center, etc. The total number of specialized phrases for self use may exceed 1000.

The keyboard of the present invention for Han character input is implemented on a standard keyboard according to the non-coding method of Han character processing described above. The 45 groups of radicals, as well as the 45 high frequency characters, are arranged on the 45 keys of the standard keyboard, as shown in Fig 5, wherein keys 11 are character category keys. There are altogether 9 of them on the keyboard, corresponding respectively to the 9 categories of Chinese characters mentioned above.

Keys 12 are functional keys for selecting characters. There are altogether 3 of them on the keyboard, corresponding, respecpectively to the last 3 of the 4 frequency grades of the Han character set namely, next frequent, infrequent, and rare.

Keys 13 are the functional keys for selecting phrases. There are altogether 3 of them on the keyboard.

Keys 14 are radical keys. There are in total 45 of them on the keyboard. On the surface of each key are marked several radicals. The total number of radicals on all the 45 keys is 231. Each key may be used either to input single characters, or to input a phrase.

Key 15 is the control key for the display. After the sequence of keys has been pressed for a character or a phrase, all the characters or phrases with the same input keysequence will appear by 9s on the word selection area 18 of the display device electrically connected with the keyboard. (see fig. 8.) Usually the display will automatically show the following group of characters or phrases in predetermined interval of time. Key 15 is used to change from the mode of automatic change of lines to the manual mode or vice versa.

Keys 16 are Chinese character or phrase selective input keys. On the keyboard are provided nine selective keys, marked with Arabic numerals 1 through 9. Press one of the keys and a corresponding Han character or phrase in the selecting area 18 of the screen will be moved into the editing area 17, i.e. inserted into the text. Then the machine will automatically return to the state ready for another input. No clear key is provided.

In the present invention on the man-machine interface the following special arrangement is made: In order to enable the prompt and accurate recognition of the needed character and its position from the nine characters appearing in the selective area 18 on the display screen, the 9 characters that appear simultaneously on the screen are arranged in triples with a space between each two, see fig. 8. Under each character is marked an Arabic number showing the serial number of its position. At the same time, in the selective area 18 are also shown the necessary hints such as categorical figure of the characters, 'frequent' or 'infrequent', etc. On the right of the 9 characters shown is given the number showing the number of words to be shown in the following lines.

To facilitate touch typing, the surfaces of the letter keys F and J and of the numeral key 5 are made a little concave to help the fingers keep their position.

OPERATIONS OF INPUTTING

Directly after the computer is turned on, it is in the 'usual' condition for Han character inputting, when each of the 45 characters of high frequency arranged on the radical keys can be input by one keystroke. The high frequency character entered appears in the text in the editing area 17 of the screen.

The most frequently used punctuation marks',', '、' and '.' (comma, pause, and period) are marked on the keys 43,44, and 45, and can be entered by directly operating the keys. Other punctuation marks, Arabic numerals and letters of the English alphabet can be entered only by first pressing the Chinese/English shift key 10.

The order of keystrokes for entering frequent characters is:

1) category key of the character,
2) radical key of the character,
3) numerical selective key.

Take the character '鯨 , jing' as example:

1) Press the category key LEFT, 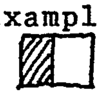
2) Press radical key 16, on which is indicated the radical 魚 (yu). Then on the display screen will be shown the first line of nine characters with the said category figure and the said radical, as follows:

▨□ 常用 魚鮮鮑 鯉鯨鰓 鱗魴鮁 56

1 2 3 4 5 6 7 8 9

The required character is to be found in the 5th position.

3) Press the numerical selective key 5, and the character 鯨 is inserted into the text and shown on the editing area 17 of the screen. The machine is now ready for a new entry.

If the required character is not found in the first 9 characters, the machine will shift automatically to the second line of 9 characters and then the third, etc. On every shifting, the index on the right will decrease by 9.

The order of keystrokes for entering next-frequent, infrequent and rare characters is as follows:

1) category key of the required character,
2) functional key for the frequency grade of the said character,
3) radical key of the character:
4) the numerical selective key corresponding to position number of the required character.

A Chinese phrase is entered according to the category of the first character. There are two methods for entering different kinds of Chinese phrases:

A) For the entry of commonly used general phrases:

1) press the category key of the first character of the phrase,
2) press the selective key for phrase (keys 13),
3) press the radical key for the first character of the phrase, and 9 phrases with the same first character will appear in the selective area 18 of the screen.
4) press the numerical selective key corrsponding to the position number of the phrase required, and the said phrase will be inserted into the text shown in editing area 17 of the screen and the machine will be ready for a new entry.

B) For the entry of special phrases encoded by the user:

1) press one phrase key,
2) press the radical key corresponding to the prquired phrase (Each phrase is given a group number, from 1 to 45, as prdedtermined by the user and the same number can be found on a radical key),
3) press the numerical selective key as in A)

Fig.4 shows flow-chart of key tapping/striking for the present non-coding method of Han character inputting and some of its specifications.

Fig. 6 is a preferred implementation of the keyboard arrangement of the present method of Chinese character inputting. In addition, the inventor compiled a book of characters and phrases, containing more than 12, 000 characters, including the unsimplified characters and variant forms of characters, facilitating the implemntation of the present invention.. As the input mode of directive selection is adopted, the present invention has a high singularity and prevents the repeatation of the same character, in spite of relatively more Han Characters compiled. Since there is no limitation to the number of words in each Category-radical group, the user can easily add new characters into the store of character types, and the most complicated characters are easily added, stored and retrieved.

WHAT IS CLAIMED IS:

1. A method to input chinese or Han characters (and the like) and phrases into a computer or other Chinese information processing device CHARACTERIZED IN THAT the input is based on the geometrical structural features of Chinese characters, using a non-coding fashion of directly pressing the geometrical category (radical position) key, the radical key and then the selective key.

2. A method to input Chinese characters and phrases as claimed in claim 1, in which the signs for geometrical categories of Han characters are designed on the basis of intrinsic properties of Han characters, and covers the whole set of Han characters (including the unsimplified characters and variant forms).

3. A method to input Chinese characters and phrases as cliamed in claims 1 and 2, in which the signs for geometrical categories of Han characters are of nine types.

4. A method to input Chinese characters and phrases as claimed in claims 1 and 2, in which 231 radicals have been chosen as typical.

5. A kind of general-purpose keyboard designed for (according to) the method of inputting Chinese as described in claim 1, futher CHARACTERIZED IN THAT Chinese characters and phrases can be input through combinations of different keystrokes and the inserted information can be displayed in the editing area on a display device connected electrically with the keyboard.

6. A kind of general-purpose keyboard for inputting Chinese as claimed in claim 5, in which the keys refer to 9 geometrical character keys, 45 Han character radical keys and function keys, and on every radical key are marked several radicals.

7. A kind of general-purpose keyborad for inputting Chinese as claimed in claims 5 and 6, in which on keyboard, each of the 45 radical keys are marked with one high-frequency Han character, while in addition, all the 231 radicals are distributed on the said 45 keys.

8. A practicable implementation of a kind of general-purpose keyboard for inputting Chinese as described in claim 5, in which the 9 keys of the geometrical category of the Chinese character are used simultaneously as selective keys to insert one of the characters or phrases shown in the selective area of the display screen into the text shown in the editing area of the screen and make the machine ready for a new input, the keys being marked with Arabic numerals 1 through 9 respectively.

9. A kind of general-purpose keyboard for inputting Chinese as described in claim 5, in which on the keyboard is provided a set of functional keys for different frequency grades of Chinese characters and keys for phrase classes.

10. A kind of general-purpose keyboard for inputting Chinese as described in claim 9, in which on the keyboard, the said functional keys comprise three keys for three grades of Han character frequencies, viz., 'next frequent', 'infrequent' and 'rare'. The keyboard is regularly in the state ready for high frequency and 'frequent' characters.

11. A kind of general-purpose keyboard for inputting Chinese as described in claim 10, in which on the keyboard, the Chinese characters are grouped into three grades according to their frequency ranks and within each grade the characters are also arranged according to their frequency ranks.

12. A kind of general keyboard for inputting Chinese as described in claim 9, on which the functional keys include 3 keys for Chinese phrases, viz., phrase I, phrase II and phrase III.

13. A method for inputting Chinese characters as described in claims 1 to 5, in which the characters or phrases of the same geometrical category and the same radical are shown on a display device connected electrically with the keyboard, and the display shows at most 9 characters at a time in one line, with every three items forming a group and a space between two such groups, or 9 phrases and at the same time, the related indicative signs and numericals are also displayed.

14. A kind of general-purpose keyboard for inputting Chinese as described in Claims 5 and 12, on which is provided a line shift mode selective key, which changes the line shift of the character/phrase selective area from automatic line (or group) shift mode to manual mode or vice versa.

15. A method for inputting Chinese characters or phrases as described in claims 1 and 5, in which the FREQUENT characters are input according to the geometrical category and radical in the following keystroke order:

1) Geometrical category key,
2) Radical key, and
3) Selective input key.

16. A method for inputting Chinese character or phrases as described in claims 1 and 5, in which the "NEXT-FREQUENT," "INFREQUENT," and "RARE" characters are input according to the geometrical category and radical in the following keystroke order:

1) Geometrical category key,
2) Radical key, and
3) Radical key, and
4) Selective input key.

17. A method for inputting Chinese characters or phrases as described in claims 1 and 5, which the commonly used general phrases are input in the following keystroke order:

1) Geometrical category key of the first character of the phrases,
2) Functional key for phrases,
3) Radical key of the first character of the phrases, and
4) Selective key for characters and phrases

18. A method for inputting Chinese characters or phrase as described in claims 1 and 5, in which the special phrases encoded by the user are input in the following keystroke order:

1) Functional key for phrases,
2) Radical key with a number coinciding with that group to the required phrases by the user, and
3) Selective key for characters and phrases.

19. A method for inputting Chinese characters or phrases as described in claims 1 and 5, in which different radicals and correspondingly different geometrical categories can be assigned to the same character and hence can be input by tapping different sets of Keys.

20. A method for inputting Chinese, i.e. Han characters and the keyboard for inputting Chinese designed in accordance with the said method as described in any of the preceding claims, which is implemented on a general purpose standard keyboard and the Chinese punctuation marks'.',' 'and '.' as well as the high frequency characters can be input by one keystroke when the device is in the condition for the input of Chinese, while other punctuation marks, Arabic numerals and English letters and texts can be input by pressing the Chinese/English shift key first.

21.The method as described in any of the preceding claims can be used in computers, electronic telewriters, typewriters, and Han character input terminals of the computer aided Chinese photo-typesetting system.

22. The method as described in claims 1 through 20 may be used in telecommunications and Chinese information Processing systems.

23. The keyboard for inputting Chinese character as described in claim 5 may by used to input characters represented by other category set and radical systems.

0196355

| SERIAL NO. | NINE GEOMETRICAL CATEGORIES | SIGNS |
|---|---|---|
| 1 | SIMPLEX | |
| 2 | LEFT HALF | |
| 3 | RIGHT HALF | |
| 4 | TOP HALF | |
| 5 | BOTTOM | |
| 6 | LEFT THIRD | |
| 7 | TOP THIRD | |
| 8 | TOP & LEFT | |
| 9 | LEFT & BOTTOM | |

*FIG. 1*

| SERIAL NO. | EXAMPLES | SIGNS | RADICALS |
|---|---|---|---|
| 1 | 冈同网周罔内 | | 冂 |
| 2 | 汁江汉汗河滋 | | 氵 |
| 3 | 现观规舰靓觎 | | 见 |
| 4 | 些柴紫赀砦訾 | | 此 |
| 5 | 盂盍盅盐监盛 | | 皿 |
| 6 | 朓腓膨鹏臃臞 | | 月 |
| 7 | 罗署置罪罚罩 | | 罒 |
| 8 | 疗症病疾痛瘾 | | 疒 |
| 9 | 赴赵起超趋趣 | | 走 |

*FIG. 2*

| EXAMPLES OF ONE RADICAL CORRESPONDING TO SEVERAL CATEGORIES | CATEGORY SIGN | RADICAL |
|---|---|---|
| 木 术 本 | 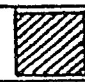 | 木 |
| 机 板 棟 | 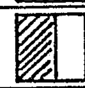 | 木 |
| 枷 棚 梗 | 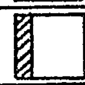 | 木 |
| 杏 李 查 | 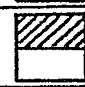 | 木 |
| 果 架 梨 | 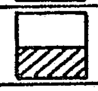 | 木 |

| EXAMPLES OF ONE RADICAL CORRESPONDING TO ONLY ONE CATEGORY | CATEGORY SIGN | RADICAL |
|---|---|---|
| 房 扇 雇 | 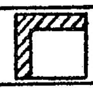 | 户 |

FIG.3

| | CHINESE CHARACTER | | | PHRASE | |
|---|---|---|---|---|---|
| KEYING IN | HIGH FREQUENT | FREQUENT | OTHERS | SPECIAL | COMMON USED |
| OPERATION OF KEY | ONCE | 3 TIMES | 4 TIMES | 3 TIMES | 4 TIMES |
| FREQUENCY OF USAGE | HIGH<br>23 % | MEDIUM<br>72 % | LOW<br>5 % | SUB-HIGH<br>— | SUB-HIGH<br>— |
| NUMBER OF CHARACTER/ PHRASE CONTAINED | 45 | 9000 | 3000 | DECIDED BY THE USER | OVER 10000 |
| FLOWCHART OF THE ORDER OF KEY-STRIKING | ↓<br>RADICAL | ↓<br>CATEGORY<br>↓<br>RADICAL<br>↓<br>SELECTIVE | ↓<br>CATEGORY<br>↓<br>GRADE<br>↓<br>RADICAL<br>↓<br>SELECTIVE | ↓<br>PHRASE<br>↓<br>RADICAL<br>↓<br>SELECTIVE | ↓<br>CATEGORY<br>↓<br>PHRASE<br>↓<br>RADICAL<br>↓<br>SELECTIVE |

FIG. 4

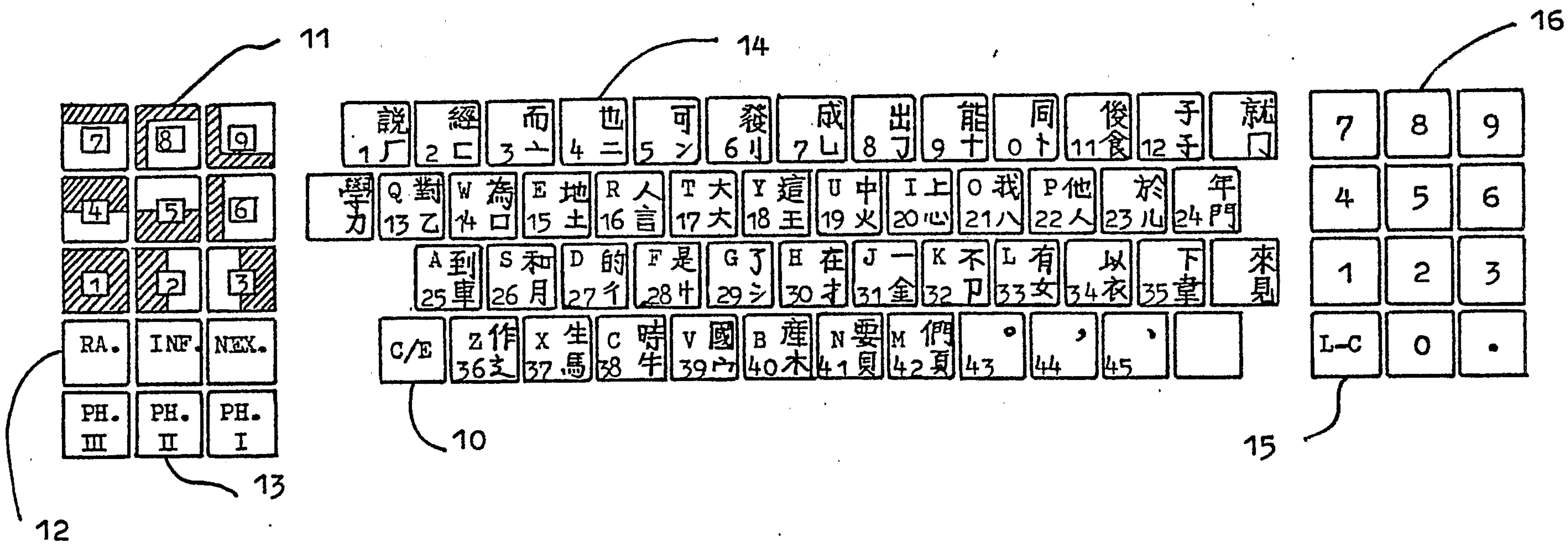


FIG. 5

| | | | | |
|---|---|---|---|---|
| NOTE: | RA. ---- RARE | | L-C ---- LINE CHANGE | |
| | INF. ---- INFREQUENT | | C/E ---- CHINESE / ENGLISH | |
| | NEX. ---- NEXT FREQUENT | | PH. ---- PHRASE | |

4/5

0196355

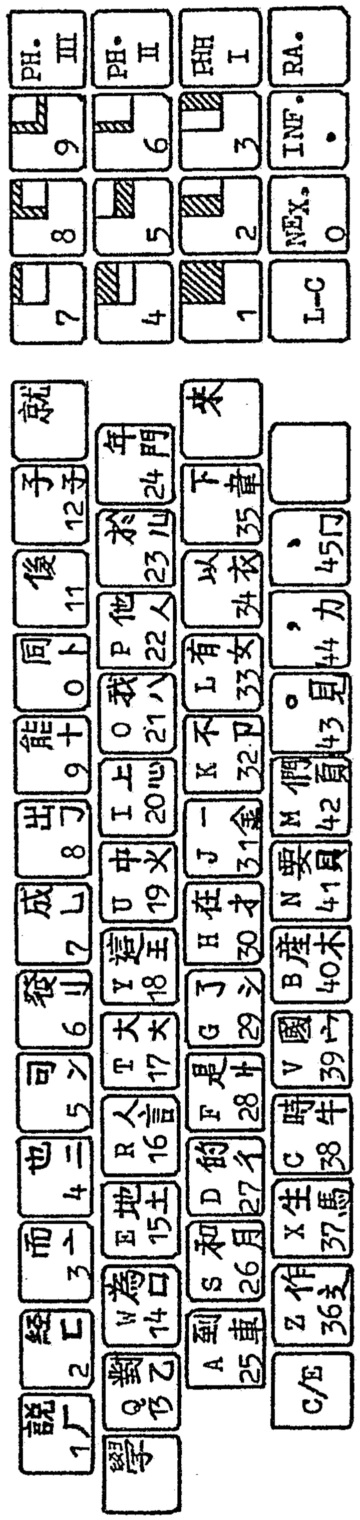

FIG. 6

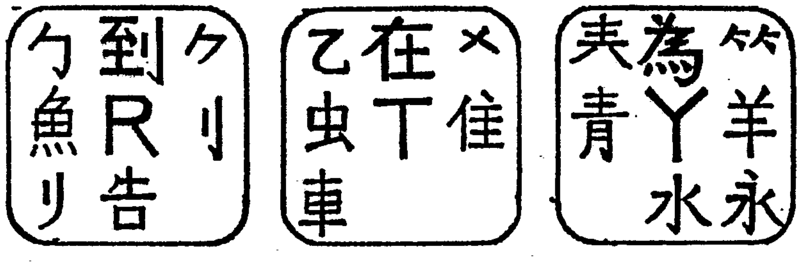
勹 到 ク
魚 R 刂
刂 告
乙 在 乂
虫 T 佳
車
夫 為 ⺮
青 Y 羊
水 永

FIG. 7

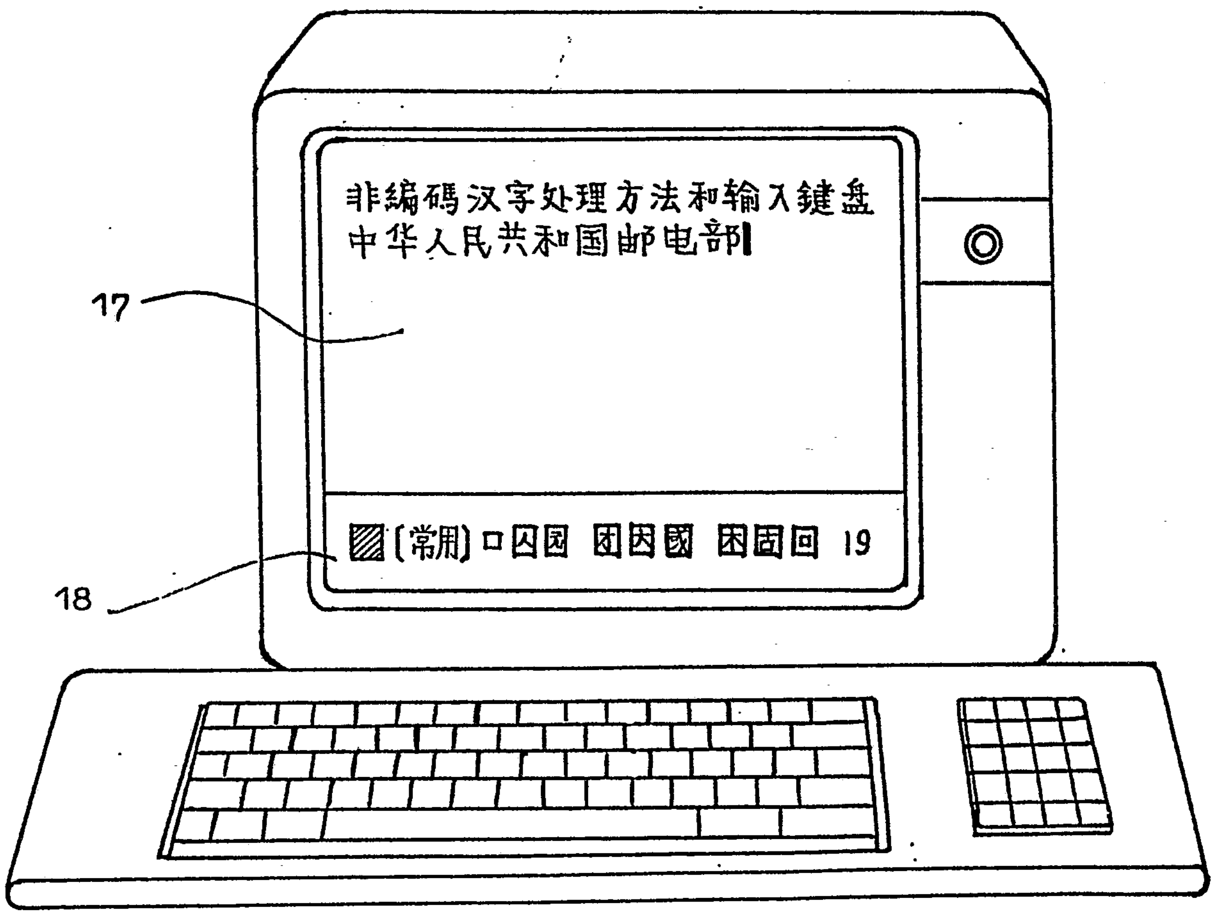
非編碼汉字处理方法和输入鍵盘
中华人民共和国邮电部
(常用) 口 囚 园 团 因 國 困 固 回 19
17
18

FIG. 8